# EUROPEAN PATENT APPLICATION

(11) **EP 4 216 118 A1**
(43) Date of publication of application: **26.07.2023**
(21) Application number: 22152759.1
(22) Date of filing: 21.01.2022
(51) Int. Cl.: G06Q 10/06

(54) **SYSTEM AND METHOD FOR AUTOMATIC IDENTIFICATION OF EVENTS FOR TRANSPORT AND EVENT MANAGEMENT**

(71) Applicant: Siemens Mobility GmbH, 81739 München (DE)
(72) Inventor: Boyd, Priscilla Nagashima, Austin, 78704 (US); Channamsetty, Sushma, Austin, 78739 (US); Parker, Laryssa, Austin, 78757 (US); Sanchez, Laura, Austin, 78703 (US)
(74) Representative: Siemens Patent Attorneys

(57) **Abstract**

The invention relates to a system (300) for automatic identification of events and generation of transport and/or traffic solutions comprising:
a plurality of data sources (310-1, 310-2, 310-N), each data source (310-1, 310-2, 310-N) comprising a plurality of data including data relating to events,
a first interface (320) configured to provide event data from the plurality of data sources (310-1, 310-2, 310-N),
a prediction module (350) comprising at least one processor (352) and configured via executable instructions to receive the event data via the first interface (320),
identify a first subset of events of the event data,
predict a demand for transport for the first subset of events,
evaluate the predicted demand for transport and existing transport options, and
generate a transport solution (360-1) that satisfies the predicted demand when the predicted demand differs from the existing transport options.

## Description

Aspects of the present disclosure generally relate to identification and prediction of events for intelligent urban mobility systems, specifically to systems and methods for automatic identification of events, prediction of transport demand and generation of transit and traffic solutions which may also be utilized for event management.

An event, such as for example a football game or a music concert, can be defined as a planned social occasion or activity. A social event is attended by a group of people, wherein the number of people can range from very small to very large. People attending the event typically need some form of transportation to and from the event location, wherein the form of transportation include private or public transportation means including automobiles, busses etc. A very popular event that is attended by a large number of people can cause challenges and impacts to existing transit services of a specific location, e.g. a city, for example by overloading existing services or not providing enough services, and to traffic management, for example by creating traffic congestion due to higher volumes of vehicles travelling within the traffic network.

On the other hand, modern technology has delivered unprecedented growth in information, sources of information, and electronic access to information. However, it is difficult, if not impossible, for an individual to obtain, search, and interpret the information for social events of interest and their potential meaning or impact.

Considering the vast amount of information and data available with respect to social events, it is an objective to provide an automated identification and/or prediction of popular events and a prediction of transport demand and/or a prediction of traffic-related issues or challenges, wherein results of such identification and/or prediction can be used by transportation agencies or providers and traffic agencies as well as event management to prepare for and thus improve transit-and traffic-related issues. Other beneficiaries of such identification and prediction of popular events and traffic-/transit-related challenges and demand include for example planning groups such as city planners, land development groups and other planning studies that can use impacts of events and public transport for analysis. Furthermore, the described system and method may also be used by parking management teams, logistics suppliers, port/airport management teams, ride hailing management teams, data vendors, emergency medical services (EMS)/law enforcement teams.

A first aspect of the present disclosure provides a system for automatic identification of events and generation of transport and/or traffic solutions comprising a plurality of data sources, each data source comprising a plurality of data including data relating to events, a first interface configured to provide event data from the plurality of data sources, a prediction module comprising at least one processor and configured via executable instructions to receive the event data via the first interface, identify a first subset of events of the modified event data, predict a demand for transport for the first subset of events, evaluate the predicted demand for transport and existing transport options, and generate a transport solution that satisfies the predicted demand when the predicted demand differs from the existing transport options.

A second aspect of the present disclosure provides a method for automatic identification of events and generation of transit and/or traffic solutions comprising, through operation of at least one processor, collecting event data from a plurality of data sources, each data source comprising a plurality of data including data relating to events, modifying and storing the event data, identifying a first subset of events of the event data, predicting a demand of transport for the first subset of events, evaluating the predicted demand of transport and existing transport options, and generating a transport solution that satisfies the predicted demand when the predicted demand differs from the existing transport options.

A third aspect of the present disclosure provides a non-transitory computer readable medium encoded with processor executable instructions that when executed by at least one processor, cause the at least one processor to carry out a method for automatic identification of events and generation of transit/traffic solutions as described herein.
FIG. 1 illustrates a diagram of event data in accordance with an exemplary embodiment of the present disclosure.
FIG. 2 illustrates a diagram of event data of a specific event in accordance with an exemplary embodiment of the present disclosure.
FIG. 3 illustrates a schematic diagram of a system for automatic identification of events and generation of transport solutions in accordance with an exemplary embodiment of the present disclosure.
FIG. 4 illustrates a schematic diagram of a method for automatic identification of events and generation of transport solutions in accordance with an exemplary embodiment of the present disclosure.
FIG. 5 illustrates a schematic diagram for collecting event data in accordance with an exemplary embodiment of the present disclosure.
FIG. 6 illustrates a schematic diagram for collecting transport data in accordance with an exemplary embodiment of the present disclosure.

To facilitate an understanding of embodiments, principles, and features of the present disclosure, they are explained hereinafter with reference to implementation in illustrative embodiments. In particular, they are described in the context of being systems and methods for identifying and predicting popular events and related transit demand and/or related traffic issues and providing transport and/or traffic solutions to satisfy the demand and/or improve or solve the related traffic issues. Embodiments of the present disclosure, however, are not limited to use in the described systems, devices or methods.

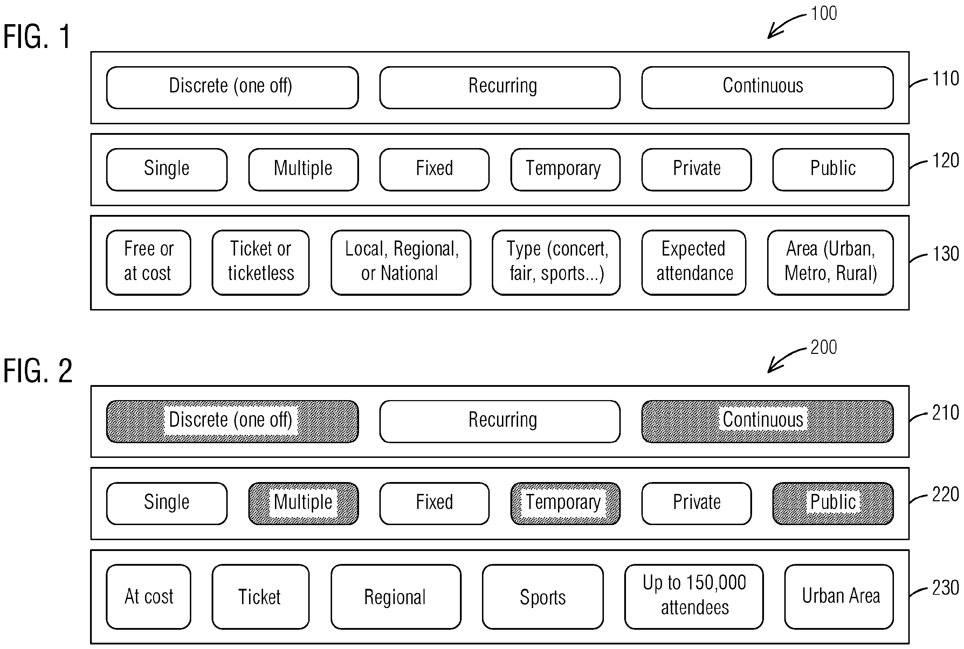

FIG. 1 illustrates a diagram 100 of event data in accordance with an exemplary embodiment of the present disclosure. As noted, the present disclosure relates to transport/transit management and event management. Events as herein described relate to social occasions or activities at a given place (location) and time attended by a group of people.

FIG. 1 illustrates diagram 100 including different types of events and different event characteristics. For example, events can be described according to duration 110, location 120, and characteristics 130. According to duration 110, an event can be discrete, e.g. one instance of an event, recurring or continuous. An example of a discrete event can be a music concert. An example for a recurring event can be a sports event, such as a football college game or a weekly farmer's market. An example of a continuous event can be for example an art installation or exhibition over several months or years.

The location 120 of an event can be a single location or multiple locations. Further, the location 120 can be fixed or temporary and it can be a public or private location. Event characteristics 130 can comprise for example costs (free or at costs), ticket or ticketless, whether the event is a local, regional or national event, type of event (concert, fair, sports etc.), area where the event location is (urban, metro, rural) and expected attendance.

FIG. 2 illustrates a diagram 200 of event data of a specific event in accordance with an exemplary embodiment of the present disclosure. Diagram 200 is based on diagram 100 of FIG. 1 including event duration 210, location 220 and characteristics 230, wherein FIG. 2 illustrates information selected of a specific event as an example. The example event is a UT (University of Texas) college football game. The UT college football game event is a recurring event at a single, fixed and private location. Further, the event is at costs, a ticket is required, it is considered a regional sports event with up to 105,000 attendees. The event location is in an urban are. Of course, it should be noted that the described event data, information and characteristics as illustrated in FIG. 1 and FIG. 2 are examples of such data, information and characteristics and many more and/or different event data and characteristics can be utilized within the described methods and systems. The various information and characteristics of events as shown exemplary in FIG. 1 and FIG. 2 are considered when identifying and predicting popular events and associated transport demand and generating corresponding transport/traffic solutions as described herein.

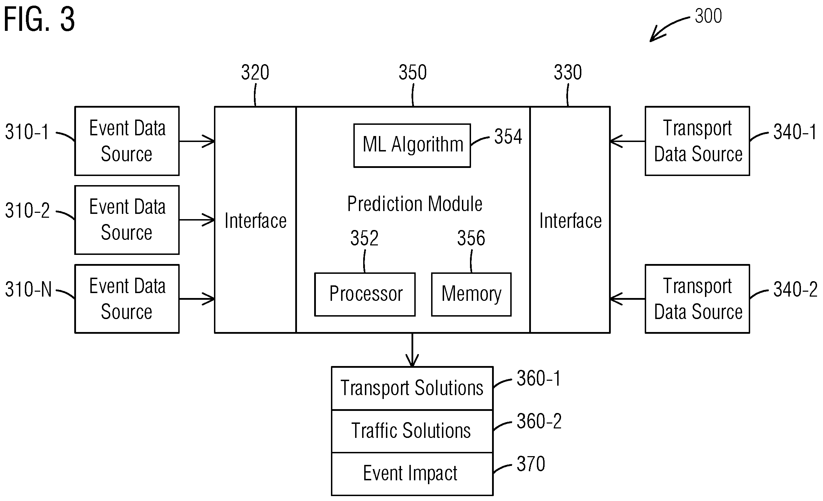

FIG. 3 illustrates a schematic diagram of a system 300 for automatic identification of events and generation of transport/traffic solutions in accordance with an exemplary embodiment of the present disclosure. The described event data, information and characteristics, as described for example in FIG. 1 and FIG. 2, are utilized for automatically identifying or determining events, in particular future popular events, and for generating or creating transport/transit solutions, such as plans or strategies, associated with the future popular events.

According to an exemplary embodiment of the present disclosure, system 300 for automatic identification of events and generation of transport solutions or traffic solutions comprises a plurality of data sources 310-1, 310-2, 310-N, wherein each data source comprises a plurality of data and information including data relating to events. The data sources 310-1, 310-2, 310-N are digital data sources and include for example websites or online sites, such as local, regional or national sites or sources that advertise events and provide event data, wherein such events can be official or unofficial events. Such websites can be for example social networking sites like Facebook^{®}, Instagram^{®} etc. Further online sources or networks can be Google^{®}, Ticketmaster^{®}, Eventbrite^{®} etc. In addition, local online event source can be included, such as for example Do512 (Live music venue in Austin, TX) and Austin360 (online marketplace for music, recreation, restaurants & food in Austin) to tailor the automatic identification of events and generation of transport/traffic/event solutions to a specific geographical area, for example a city, e.g. Austin, or county, e.g. Travis County, or a state, e.g. Texas. It should be noted that Austin, Travis County and Texas are only examples of geographical areas and that the described method and system can be applied and tailored to geographical areas all over the world. For example, an automatic identification of events and generation of transport/traffic/event solutions can be performed for the city of Berlin in Germany or the province of Ontario in Canada, wherein local or regional event data sources for Berlin or Ontario can be identified and utilized.

It should be noted that system 300 may comprise many more data sources than illustrated in FIG. 3, for example specific local or regional event data sources to provide solutions for a specific city or region requested for example by a specific regional transportation agency or city. Further, the data sources can be such that popular unofficial events, such as private fundraiser events or private parties, can be identified. Furthermore, it should be noted that the data sources 310 are digital. Analog event information, for example from a newspaper or magazine, may be transformed into digital data and also used by the system 300.

The system 300 comprises a first interface 320, generally configured to provide, for example to collect, obtain or receive, event data from the plurality of data sources 310-1, 310-2, 310-N. Further, the system 300 comprises a second interface 330 generally configured to provide, for example to collect, obtain or receive, transport/transit data from one or more data sources 340-1, 340-2.

An interface as used herein (such as the first/second interface 320, 330) comprises or includes a type of mechanism or device for providing, including for example transferring, moving, exchanging, data from a source (such as for example the data sources 310-1, 310-2, 310-N, 340-1, 340-2) to a target (such as for example prediction module 350).

An example for an interface is a computing interface or software implemented interface which defines interactions between multiple software intermediaries. An example for a computing interface is an application programming interface (API), wherein the API interacts with separate software components or resources for providing, e.g. transferring or exchanging, data in an automated manner from the data sources 310-1, 310-2, 310-N, 340-1, 340-2, to the target application. Another example for an interface includes collecting or obtaining event data from the data sources 310-1, 310-2, 310-N, 340-1, 340-2, in a separate manual or automated step, and then, in a subsequent step, provide the collected event data, for example export, transfer or upload, to the target application. In an example, event data may be collected in an xlsx file and then uploaded in the target application.

Generally, via the first interface 320 event data and features are provided. In an example, the first interface 320 is configured to collect event data and features, such as shown in FIG. 1 or FIG. 2, from the data sources 310-1, 310-2, 310-N. The interface 320 may be configured to identify and collect data of future events only or may be configured (programmed) to collect event data of past events only or future and past events.

Via the second interface 330 transport/transit data from data sources 340-1, 340-2 are provided. Transport data source 340-1 provides existing transport options, such as public transport options including available bus and train rides, provided via bus/train schedules etc. or private options, such as ride sharing, ride-hailing and Mobility-as-a-service options, to establish or determine existing transport options. Traffic data source 340-2 provides existing traffic solutions, such as traffic signal plans or other traffic related input information including for example current road closures, road construction etc., to establish existing traffic plans or patterns. It should be noted that the system 300 may only collect transport data from transport data source 340-1 or only traffic data from traffic data source 340-2.

In an embodiment of the present disclosure, the system 300 comprises a prediction module 350 comprising at least one processor 352 and a memory 356. In exemplary embodiments, the memory 356 may include any of a wide variety of memory devices including volatile and non-volatile memory devices, and the at least one processor 352 may include one or more processing units.

The memory 356 includes software with a variety of applications. One of the applications includes a method for automatic identification of events and generation of transport and/or traffic solutions. For this application, the at least one processor 352 is configured, via computer executable instructions, to receive event data from the plurality of data sources 310-1, 310-2, 310-N via the first interface 320 and the transport/traffic data via the second interface 330. In general, the prediction module 350 is configured to process all received data and to identify popular events, the results of the identifying of popular events being described herein as event impact 370. Further, the prediction module 350 is configured to predict a demand for transport for the popular events and to generate one or more transport solution(s) 360-1, such as a plan or a strategy, for example to satisfy the demand when the demand for transport differs from the existing transport options. In another embodiment, the prediction module 350 is configured to predict traffic related issues or challenges, such as for example traffic congestions or jams, and to generate one or more traffic solution(s) 360-2 or strategy, for example a modified or adapted traffic signal plan, to avoid or at least reduce the predicted traffic congestions or jams. Of course, the at least one processor 352 may be configured to perform only the process(es) described herein or can also be configured to perform other processes.

Identification, with respect to popular events, means to predict, forecast or estimate which of the events are the (most) popular events and will be attended by a large number of people. In an embodiment, the identification or prediction of popular events is implemented utilizing Artificial Intelligence (AI), for example by a machine learning (ML) algorithm or model 354 utilizing specific input parameters.

The prediction module 350 may be embodied as software or a combination of software and hardware. The prediction module 350 may be a separate module or may be an existing module programmed to perform a method as described herein. For example, the prediction module 350 may be incorporated, for example programmed, into an existing transport, traffic or event management/monitoring device, by means of software.

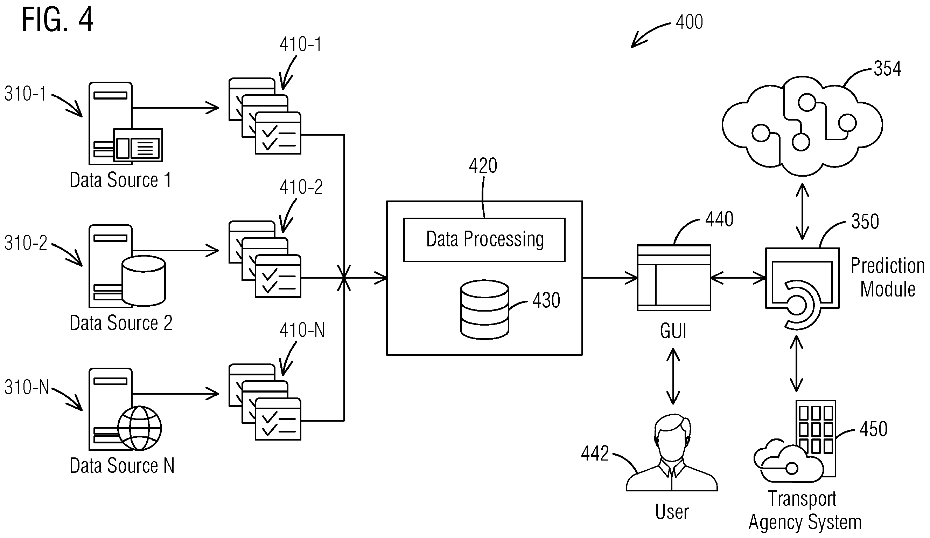

FIG. 4 illustrates a schematic diagram of a method 400 for automatic identification of events and generation of transport solutions in accordance with an exemplary embodiment of the present disclosure. While the method 400 is described as a series of acts or steps that are performed in a sequence, it is to be understood that the method 400 may not be limited by the order of the sequence. For instance, unless stated otherwise, some acts may occur in a different order than what is described herein. In addition, in some cases, an act may occur concurrently with another act.

Furthermore, in some instances, not all acts may be required to implement a methodology described herein.

The method comprises, through operation of at least one processor, such as for example prediction module 350 with processor 352, collecting event data from a plurality of data sources 310-1, 310-2, 310-N, each data source comprising a plurality of data including data relating to events, as described with reference to FIG. 3. As noted, the event data can be collected via an interface, such as interface 320 of FIG. 3. In an example, future event data 410-1, 410-2, 410-N of future events are collected.

It should be noted that the collection of event data can be integrated into the prediction module 350, e.g. performed by the prediction module 350, or can be separate process or module. The collection of event data is performed recurrent in a scheduled manner. As noted, the interface 320 may be part of the prediction module 350 or may be separate module.

In an embodiment, collected future event data 410-1, 410-2, 410-N are subject to data processing 420 and data storage 430. In an example, the event data 410-1, 410-2, 410-N may be processed first and then stored. An example includes an ETL (extract-transform-load) process, wherein data are extracted and transformed and then loaded, e.g. stored in data storage 430. In another example, the event data 410-1, 410-2, 410-N may be stored first and then processing. An example includes an ELT (extract-load-transform) process, wherein data is extracted, loaded, e.g. loaded in data storage 430, and then transformed, e.g. processed via data processing 420. An aspect of the ELT process is that raw data can be stored and retained since the processing/transforming is performed after the loading/storing. ETL and ELT are types of data integration processes used to integrate and/or synthesize data from multiple data sources. The data processing 420 includes for example deleting data that are not needed or transforming data in a useful or more efficient format.

The event data, stored in data store 430 and processed via the data processing 420, are provided to and received by the prediction module 350 used to provide a prediction service or method. The prediction module 350 comprises ML model or algorithm 354 for identifying a first subset of events. Identification or determination of the first subset of events comprises implementing the ML algorithm 354 with a plurality of input parameters.

In an example, the first subset of events includes popular events, in particular the most popular events of the stored event data. In another example, the first subset of events may not comprise popular events, which represents one type of classification, but comprises best accessible events based on specific input parameter.

In an exemplary embodiment of the present disclosure, the ML algorithm 354 classifies the collected event data into the first subset of events and at least a further subset of events utilizing the plurality of input parameter, wherein the first subset of events comprises popular events. An example of the ML algorithm 354 comprises a random forest or random decision forest model utilizing specific, for example custom configuration, input parameters or variables, wherein the ML algorithm 354 is configured to rank importance of the input variables. In our example of identifying popular events, the input parameters or variables comprise event rating information combined with event characteristics selected from duration, location, time, venue, title, category, affiliation, cost, artist popularity etc. and a combination thereof. The ML algorithm 354 (which can include open source software) with custom configuration parameters is used to identify popular events automatically.

Event rating information as used herein includes for example ratings, likes, votes for the events which are provided for example by users and potential attendees of the events. Such ratings, likes and votes are included in the event data retrieved from the data sources 310-1, 310-2, 310-N, which are for example social networking sites like Facebook^{®}, Instagram^{®} etc. or online sources like Google^{®}, Ticketmaster^{®}, Eventbrite^{®} etc.

With respect to the implementation of the ML algorithm 354, the event rating information, provided by users and potential attendees of the future events, is considered or ranked or weighed in view of the event characteristic information such as duration, location, time, venue, title, category, affiliation, cost, artist popularity etc. The ML algorithm 354 is trained and capable of ranking or weighing the event rating information and event characteristics. As noted, the ML algorithm 354 is a classification algorithm able to classify the events in different classes. A classification problem for the ML algorithm 354 is that most of the event characteristics features (location, time etc.) are not showing linear relationships with the event rating information provided by the users. For example, an event that has received a very large number of votes or likes, may not be a very popular event because the event is scheduled for a weekday (instead of a weekend) and is expensive (high ticket price). In an example, the ML algorithm 354 trains and learns, for example unsupervised, using historic data, which event characteristic features in combination with event rating information promise and predict a popular event that will be attended by a large number of people. For example, historic data may show that events on weekends and holidays are more popular than events during the week, or events in certain locations are more popular than other locations. Based on this input information, the ML algorithm 354 can learn and predict popular events with increasing accuracy over time. Specifically, the ML algorithm 354 is configured to classify the events in three (3) different classes, which are events with high event rating, events with medium event rating and events with low event rating, wherein high event rating corresponds to the first subset of events comprising popular events.

The system 300 and method 400 further comprise a graphical user interface (GUI) 440 for visualizing and displaying information provided by the prediction module 350 and associated method. For example, the GUI 440 displays the first subset of events, e.g. most popular events/events with high event rating. Further, in another example, the GUI 440 displays (maps out) the identified or predicted popular future events against existing transit and shared mobility options. Via the GUI 440, user 442 is able to see future popular events, for example in a specific city, verify current transport options for the event location and understand availability or unavailability of transport/transit. In another embodiment, the user 442 is able to access past events for analysis.

The method 400 further comprises predicting a demand of transport for the first subset of events, evaluating, e.g. comparing, the predicted demand of transport to existing transport options, and generating a transport solution that satisfies the predicted demand when the predicted demand differs from the existing transport options. As described with reference to FIG. 3, transit (transport) and/or traffic related data of existing transport options and traffic are also collected and provided to the prediction module 350.

In an example, FIG. 4 illustrates that Transport Agency System 450 provides transport data for the prediction module 350. Thus, in a first step, the prediction module 350 can evaluate existing transport options of Transport Agency System 450 to the location(s) of the future popular events, and can identify and provide, to the Transport Agency System 450, gaps or differences between available existing transport options and future popular events. For example, the prediction module 350 may identify a very popular event at a specific time and location and indicate that the Transport Agency System 450 does not have enough transport options available to and from the event location at the specific time. In a second step, the prediction module 350 may generate or create a transport solution when the predicted transport demand differs from the existing transport options. In our example, the prediction module 350 may generate a strategy or plan to increase bus rides or train rides to and from the event location and may even generate modified bus or train schedules.

In another embodiment, the Transport Agency System 450 may be a system of a ride-sharing, ride-hailing and Mobility-as-a-service provider. Based on the popular future events and available ridesharing options, the prediction module 350 may suggest increasing rideshares, e.g. number of vehicles and/or drivers, to the transport agency when available ridesharing options may not be enough for the popular future events.

In another exemplary embodiment of the present disclosure, the method 400 and system 300, specifically the prediction module 350, comprise predicting traffic for the first subset of events and generating a traffic solution based on existing traffic signal plans, the traffic solution comprising modified traffic signal plans. For example, the prediction module 350 may predict a large amount of traffic including congestions and jams on specific highways or roads for a popular event. Based on existing traffic information, such as traffic signal plans, the prediction module 350 may generate a traffic solution which includes for example extending green light phases for specific roads to and from the event location, providing additional traffic signs, creating alternative routes to the event location etc.

It should be appreciated that the described method 400 may include additional acts and/or alternative acts corresponding to the features described previously with respect to the system 300 and evaluation module 350 (see FIG. 3).

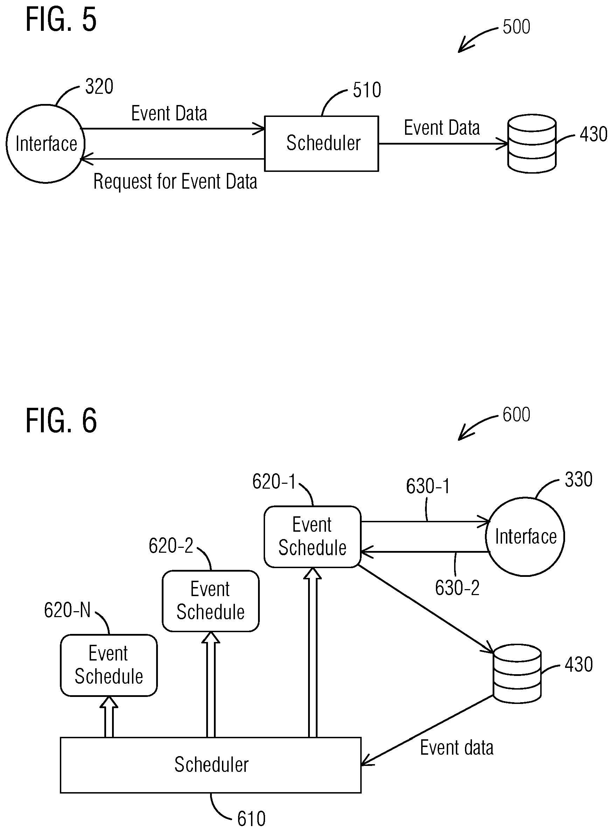

FIG. 5 illustrates a mechanism for collecting event data in accordance with an exemplary embodiment of the present disclosure. The mechanism 500 illustrates an example of collecting the event data from the multiple data sources 310-1, 310-2, 310-N. In this example, a computer scheduler 510 is configured such that event data are collected recurrently in a scheduled manner. For example, the scheduler 510 runs daily at 1:00am to collect event data for the next seven (7) days and stores collected event data in the data storage 430. An example of such a scheduler is a Python scheduler. Python is a programming language suitable for scheduling in combination with an API. Of course, many other scheduling services/modules or data collection services/modules can be used, and the event data may be collected more or less frequently than one a day.

FIG. 6 illustrates a mechanism for collecting transport data in accordance with an exemplary embodiment of the present disclosure. The mechanism 600 illustrates how ridesharing data are collected and compared to event schedules of popular events. In this example, a computer scheduler 610 is configured such that transport data are collected recurrently in a scheduled manner. Scheduler 610, for example a Python scheduler, runs daily at 6:00am to collect event data from the data store 430. Based on the collected event data, different event schedules 620-1, 620-2, 620-N are created. Event schedule 620-1 is schedule comprising the most popular events (events with high rating), event schedule 620-2 is a schedule comprising less popular events (events with medium rating) and event schedule 620-N is a schedule comprising least popular events (events with low rating). The event schedules 620-1, 620-2, 620-N. On the other hand, existing ridesharing options are obtained or collected via the second API 330 from the ridesharing provider, and compared to the event schedules 620-1, 620-2, 620-N, illustrated by the arrows 630-1, 630-2.

With the provided system and method for automatic identification of popular events and prediction of transit/transportation demand, transportation agencies can better manage options for traffic and transit users. The automatic identification of upcoming events helps reducing manual searches. Mapping out (displaying) transport options helps leveraging existing transport/transit systems, and gaps and opportunities can be identified that improve a level of service and ridership.

Further, predicting unplanned events can help an agency increase ridership by simply promoting existing services in advance or by using on-demand transit as an alternative. Prediction of unplanned events can help reduce overhead associated with planning and can give the potential for automatically triggering signal plans and signage through system-to-system ATMS interfaces. The prediction data of popular events, including their location, date/time and type can be of value to city planners and could be used for simulation-based studies. Other beneficiaries or customers or users of the provided system and method include logistics suppliers, parking operators, ports, airports, ride hailing or data vendors.

It should be appreciated that acts associated with the above-described methodologies, features, and functions (other than any described manual acts) may be carried out by one or more data processing systems, such as for example prediction module 350, via operation of at least one processor 352. As used herein, a processor corresponds to any electronic device that is configured via hardware circuits, software, and/or firmware to process data. For example, processors described herein may correspond to one or more (or a combination) of a microprocessor, CPU, or any other integrated circuit (IC) or other type of circuit that is capable of processing data in a data processing system. As discussed previously, the module 350 and/or processor 352 that is described or claimed as being configured to carry out a particular described/claimed process or function may correspond to a CPU that executes computer/processor executable instructions stored in a memory in form of software and/or firmware to carry out such a described/claimed process or function. However, it should also be appreciated that such a processor may correspond to an IC that is hard wired with processing circuitry (e.g., an FPGA or ASIC IC) to carry out such a described/claimed process or function.

In addition, it should also be understood that a processor that is described or claimed as being configured to carry out a particular described/claimed process or function may correspond to the combination of the module 350/processor 352 with the executable instructions (e.g., software/firmware apps) loaded/installed into a memory (volatile and/or non-volatile), which are currently being executed and/or are available to be executed by the processor 352 to cause the processor 352 to carry out the described/claimed process or function. Thus, a processor that is powered off or is executing other software, but has the described software installed on a data store in operative connection therewith (such as on a hard drive or SSD) in a manner that is setup to be executed by the processor (when started by a user, hardware and/or other software), may also correspond to the described/claimed processor that is configured to carry out the particular processes and functions described/claimed herein.

Further, it should be understood, that reference to "a processor" may include multiple physical processors or cores that are configured to carry out the functions described herein.

It is also important to note that while the disclosure includes a description in the context of a fully functional system and/or a series of acts, those skilled in the art will appreciate that at least portions of the mechanism of the present disclosure and/or described acts are capable of being distributed in the form of computer/processor executable instructions (e.g., software and/or firmware instructions) contained within a data store that corresponds to a non-transitory machine-usable, computer-usable, or computer-readable medium in any of a variety of forms. The computer/processor executable instructions may include a routine, a sub-routine, programs, applications, modules, libraries, and/or the like. Further, it should be appreciated that computer/processor executable instructions may correspond to and/or may be generated from source code, byte code, runtime code, machine code, assembly language, Java, JavaScript, Python, Julia, C, C#, C++, Scala, R, MATLAB, Clojure, Lua, Go or any other form of code that can be programmed/configured to cause at least one processor to carry out the acts and features described herein. Still further, results of the described/claimed processes or functions may be stored in a computer-readable medium, displayed on a display device, and/or the like.

## Claims

1. A system (300) for automatic identification of events and generation of transport and/or traffic solutions comprising:
a plurality of data sources (310-1, 310-2, 310-N), each data source (310-1, 310-2, 310-N) comprising a plurality of data including data relating to events,
a first interface (320) configured to provide event data from the plurality of data sources (310-1, 310-2, 310-N),
a prediction module (350) comprising at least one processor (352) and configured via executable instructions to receive the event data via the first interface (320),
identify a first subset of events of the event data,
predict a demand for transport for the first subset of events,
evaluate the predicted demand for transport and existing transport options, and
generate a transport solution (360-1) that satisfies the predicted demand when the predicted demand differs from the existing transport options.

2. The system (300) of claim 1, further comprising:
a second interface (330) configured to provide transport data from a transport data source (340-1) to provide the existing transport options.

3. The system (300) of claim 2, wherein the first interface (320) and the second interface (330) are configured to provide data recurrently in a scheduled manner utilizing a scheduling mechanism (500).

4. The system (300) of claim 1, wherein the prediction module (350) comprises a machine learning (ML) algorithm (354) and is configured via executable instructions to identify the first subset of events by implementing the machine learning (ML) algorithm (354) with a plurality of input parameters.

5. The system (300) of claim 4, wherein the first subset of events comprises popular events of the collected event data, wherein the ML algorithm (354) classifies the collected event data into the first subset and at least another subset of events based on the plurality of input parameters.

6. The system (300) of claim 1, further comprising:
a graphical user interface (440), wherein the prediction module (350) is configured via executable instructions to display, via the graphical user interface (440), the first subsets of events and existing transport options in connection with the first subset of events.

7. A method (400) for automatic identification of events and generation of transit and/or traffic solutions comprising through operation of at least one processor:
collecting event data from a plurality of data sources (310-1, 310-2, 310-N), each data source (310-1, 310-2, 310-N) comprising a plurality of data including data relating to events,
modifying and storing the event data,
identifying a first subset of events of the event data,
predicting a demand of transport for the first subset of events,
evaluate the predicted demand of transport and existing transport options, and
generating a transport solution (360-1) that satisfies the predicted demand when the predicted demand differs from the existing transport options.

8. The method (400) of claim 7, wherein the collecting comprises collecting the event data recurrent in a scheduled manner via an application programming interface (320).

9. The method (400) of claim 7, wherein the modifying comprises an ETL (extract-transform-load) process or an ELT (extract-load-transform) process.

10. The method (400) of claim 7, wherein the identifying of the first subset of events comprises implementing a machine learning (ML) algorithm (354) and a plurality of input parameters.

11. The method (400) of claim 10, wherein the plurality of input parameters comprise event rating information combined with event characteristics selected from duration, location, time, venue, title, category, affiliation, cost, artist popularity and a combination thereof.

12. The method (400) of claim 9, further comprising, via a graphical user interface (440), displaying the first subset of events and existing transport options of the first subset of events.

13. The method (400) of claim 7, wherein the generating of the transport solution (360-1) that satisfies the predicted demand when the predicted demand differs from the existing transport options comprises creating modified public transport schedules.

14. The method (400) of claim 7, further comprising predicting traffic for the first subset of events and generating a traffic solution (360-2) based on existing traffic signal plans, the traffic solution (360-2) comprising modified traffic signal plans.

15. A non-transitory computer readable medium encoded with processor executable instructions that when executed by at least one processor, cause the at least one processor to carry out a method for automatic identification of events and generation of transit and/or traffic solutions as claimed in claim 7.
